# EUROPEAN PATENT APPLICATION

(11) **EP 0 590 606 A2**
(43) Date of publication of application: **06.04.1994**
(21) Application number: 93115645.9
(22) Date of filing: 28.09.1993
(51) Int. Cl.: G06F 15/78, G06F 15/76, G06F 9/38

(54) **Vector operation processor**

(30) Priority: 28.09.1992 JP 257886/92
(71) Applicant: NEC CORPORATION, Tokyo (JP)
(72) Inventor: Inoue, Toshiaki, c/o NEC Corporation, Minato-ku, Tokyo (JP)
(74) Representative: Betten & Resch

(57) **Abstract**

A vector operation processor of the present invention comprises an operation processor (110) to form a plurality of operation processing systems capable of parallel processing by combination of read memory (RM1, RM2), operator (OP1, OP2) and write memory (WM1, WM2) and also comprises a controller (110) having an instruction decoder (111) to decode the vector operation instruction and output the operation control signal to the operation processor according to said instruction, a resource status table (112) to hold the information on whether the resources including read memories, operators and write memories in the operation processor are in use or not in use, and an instruction execution judging device (113) to judge whether the resource requested by said vector operation instruction can be used or not. The resource status table (112) has status registers (202, 203) to hold the data indicating whether the applicable resource is in use or not for the number corresponding to the number of resources. Supplied to such status registers is the address generation completion signal output from the address generator corresponding to the read memory and write memory.

## Description

### BACKGROUNDS OF THE INVENTION

### FIELD OF THE INVENTION

The present invention relates to a vector operation processor and particularly relates to a vector operation processor characterized by its control for parallel processing.

### DESCRIPTION OF THE RELATED ART

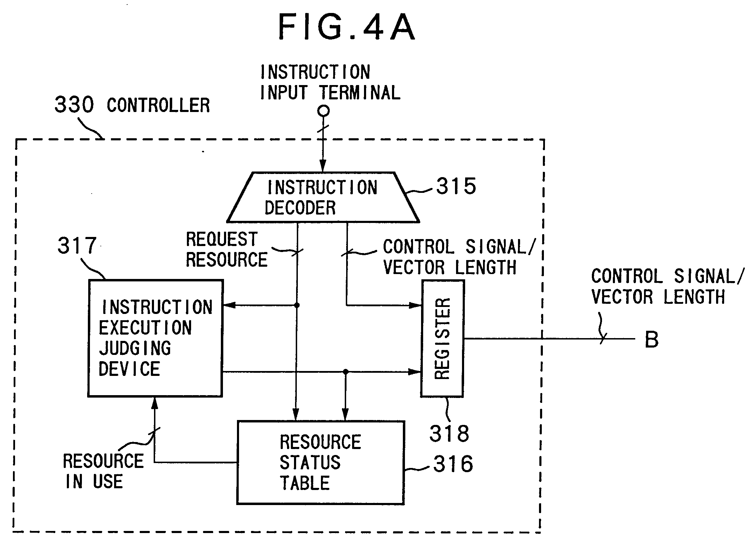

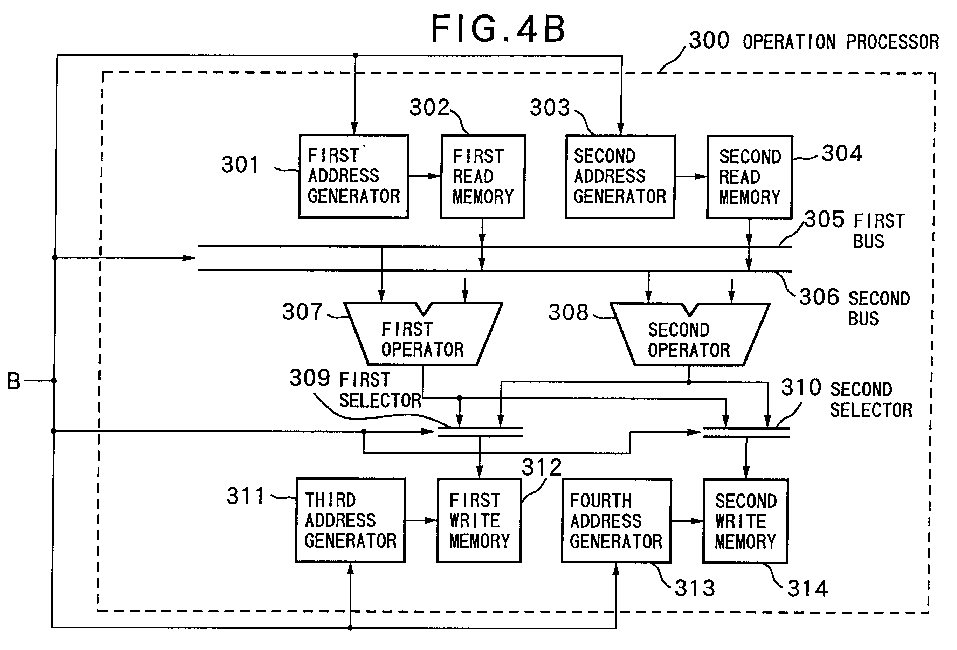

Fig. 4 shows an example of a conventional vector operation processor. This vector operation processor consists of a controller 330 and an operation processor 300. The operation processor 300 comprises a first address generator 301, a second address generator 303, a third address generator 311, a fourth address generator 313, a first read memory 302, a second read memory 304, a first bus 305, a second bus 306, a first operator 307, a second operator 308, a first selector 309, a second selector 310, a first write memory 312 and a second write memory 314. A vector operation processing system is formed by combining either of the read memories 302 and 304 and the corresponding address generator 301 or 303, as well as either of the operators and either of the write memories and the corresponding address generator.

The operation processor 300 has a configuration where two vector operations can be processed in parallel. Specifically, each of two read memories separately selects a bus to output data so as to prevent collision of outputs and the selectors select outputs from different operators. When one vector operation processing system is established, the other vector operation processing system operable in parallel is uniquely determined. The address generators 301, 303, 311 and 313 supply a series of addresses to the memories 302, 304, 312 and 314. The control signal supplied to the operation processor 300 specifies the bus where the output from the two read memories 302 and 304 are sent (first bus 305 or second bus 306) and selects the input for two selectors 309 and 310 so as to control four address generators 301, 303, 311 and 313. The address generator is provided with a counter to count the vector length, which generates addresses until completion of counting for the vector length. The counter stops address generation with giving an address generation completion flag when it completes counting for the vector length.

The controller 330 comprises an instruction decoder 315, a resource status table 316, an instruction execution judging device 317 and a register 318. The instruction decoder 315 decodes the instruction input from outside to output the number of vector data for operation processing (vector length) and the type of the resource to be used by the instruction (request resource) to the resource status table 316 and outputs the control signal and the vector length to the operation processor 300. Here, the vector length means a number of vector data (length) processed by one vector operation instruction.

The resource status table 316 holds the status indicating whether the resources in the operation processor 300 (memories 301, 304, 312 and 314 and operators 307 and 308) are currently in use or not and outputs such status to the instruction execution judging device 317. The instruction execution judging device 317 checks the request resource from the instruction decoder 315 against the status in the resource status table 316 and enables its output if the request resource is not in use (no contention for the resource). The output from the instruction execution judging device 317 is to be sent to the resource status table 316 and the register 318. When such output is enabled, the resource status table 316 holds the received request resource as resource in use and the register 318 outputs the received control signal to the operation processor 300 in order to execute the instruction. When the output of the instruction execution judging device 317 is not enabled (no resource is available), the resource status table 316 is not updated, the control signal is not output to the operation processor 300 from the register 318 and the execution of the instruction is held until the resource contention is over.

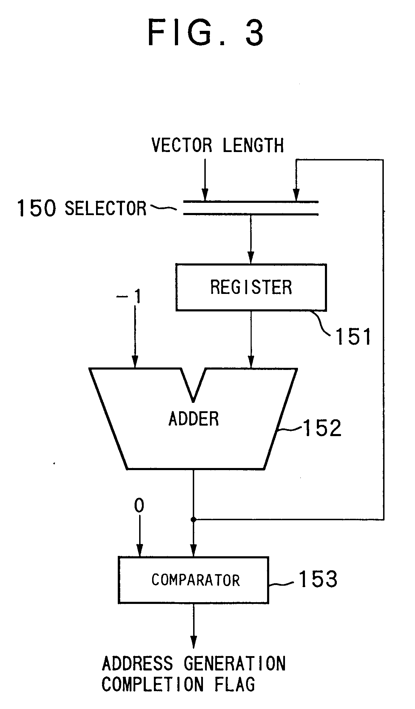

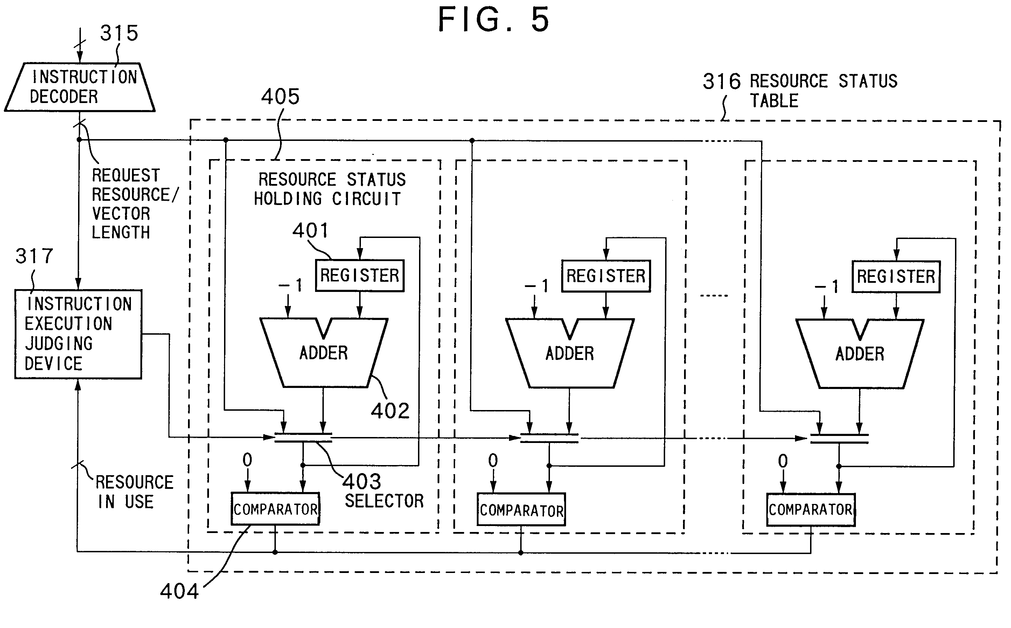

Fig. 5 shows the configuration of a conventional resource status table 316. The resource status table 316 has, for the number of resources, resource status holding circuits 405, each comprising a register 401, an adder 402, a selector 403 and a comparator 404. For example, the operation processor 300 of Fig. 3 has six resource status holding circuits 405. The resource status holding circuit 405 receives the vector length output from the instruction decoder 315 and the output from the instruction execution judging device 317 and outputs whether the resource is in use or not.

The resource status holding circuit 405 constitutes a type of counter. When the output of the instruction execution judging device 317 is enabled, the selector 403 selects a vector length to be output to the register 401 and the comparator 404. Thereafter, by selection from the outputs from the adder 402, the selector 403 serves as a counter together with the register 401 and the adder 402. Such counter counts down the vector length stored in the register 401. The comparator 404 compares the counted down result with "0" to obtain the period of use for the resource. For example, it outputs a high level signal for non-zero and a low level signal for other cases. Thus, the resource status holding circuit 405 outputs a high level signal to show that the resource is in use.

As described above, a conventional vector operation processor has a counter to count the vector length independent from the address generators 301, 303, 311 and 313 and the resource status holding circuits 405 of the resource status table 316. This enables correct indication about whether the resource is in use or not by the resource status holding circuits 405. However, as the vector length n increases, the hardware amount of the resource status holding circuits 405 increases in proportion to log₂n. Recently, the vector length tends to become longer as the increase of memory capacity and the hardware amount of the vector operation processor also tends to become larger for the reason above.

### SUMMARY OF THE INVENTION

It is an object of the present invention to provide a vector operation processor with a simple hardware configuration having a resource status table independent from the vector length for a smaller hardware amount of the resource status table which does not increase its hardware amount even when the vector length increases.

According to a preferred embodiment of the present invention to attain the above object, a vector operation processor comprises an operation processor for vector data processing and a controller for control of parallel processing by said operation processor. The operation processor comprises a plurality of read memories to store said vector data, a plurality of operation means for operation of the vector data read from said memories, a plurality of write memories to store the operation result from said operation means, and a plurality of address generation means provided for each of said read and write memories to supply read or write address and forms a plurality of operation processing systems capable of parallel operations with said read memories, said operation means and said write memories. The controller comprises an instruction decoder to decode the vector operation instruction and to output the operation control signal to said operation processor according to said instruction, a resource status table to hold the information indicating whether the resource including said read memory, operation means and write memory in said operation processor is in use or not and an instruction execution judging means which refers to said resource status table and judges whether the resource requested by said vector operation instruction is usable or not. Such resource status table further comprises status holding means to hold information indicating whether each resource is in use or not for the number corresponding to the number of resources, to which the address generation completion signal output from said address generation means is sent. The status holding means sets the information to "in use" when the resource requested by said vector instruction is not in use and, upon receipt of address generation completion signal output from said address generation means, sets the information in use corresponding to said address generation means to "not in use".

According to a further preferred embodiment of a vector operation processor according to the present invention, said resource status table comprises a selection means which selects one of said status holding means with the resources not in use and outputs a set signal to set "in use" information for the resource requested by said vector operation instruction.

According to another preferred embodiment of a vector operation processor according to the present invention, said resource status table comprises a selection means which, if said instruction execution judging means judges that the requested resource can be used, selects said status holding means with the resources not in use and outputs a set signal to the resource requested by said vector operation instruction.

According to still another preferred embodiment of a vector operation processor according to the present invention, said status holding means of said resource status table comprises a plurality of flip-flops corresponding to said resources.

According to a further preferred embodiment of a vector operation processor according to the present invention, said resource status table selects said status holding means with the resources not in use and outputs a set signal to the resource requested by said vector operation instruction upon judgment by said instruction execution judging means that the resource can be used, and said status holding means of said resource status table comprises a plurality of flip-flops corresponding to said resources and said flip-flops are set by said set signal from said selection means and reset by the address generation completion signal output from said address generation means.

Other objects, characteristics and effects of the present invention will be clarified in detailed description below.

### BRIEF DESCRIPTION OF THE DRAWINGS

Fig. 1 is a block diagram to show the configuration of a vector operation processor according to a preferred embodiment of the present invention;
Fig. 2 is a block diagram to show the configuration of a resource status table of a vector operation processor of Fig. 1;
Fig. 3 is a diagram to show the configuration of a counter incorporated in an address generator;
Fig. 4 is a block diagram to show an example of a conventional vector operation processor; and
Fig. 5 is a block diagram to show the configuration of a resource status table of a vector operation processor of Fig. 4.

### DESCRIPTION OF THE PREFERRED EMBODIMENT

Referring to the attached figures, preferred embodiments of the present invention will be described in detail below.

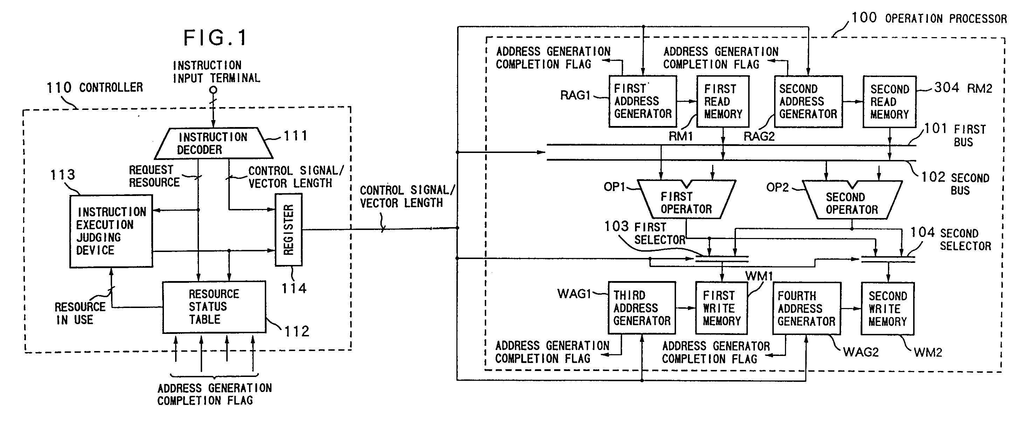

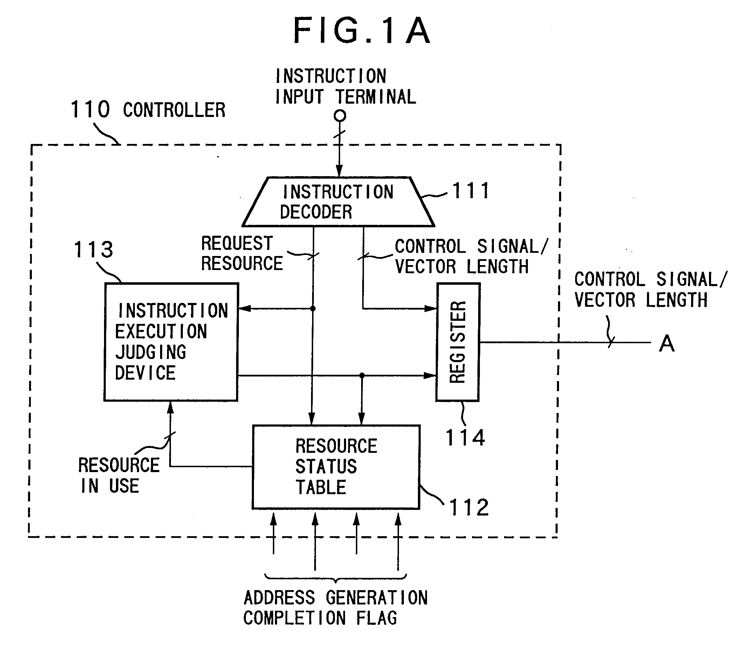

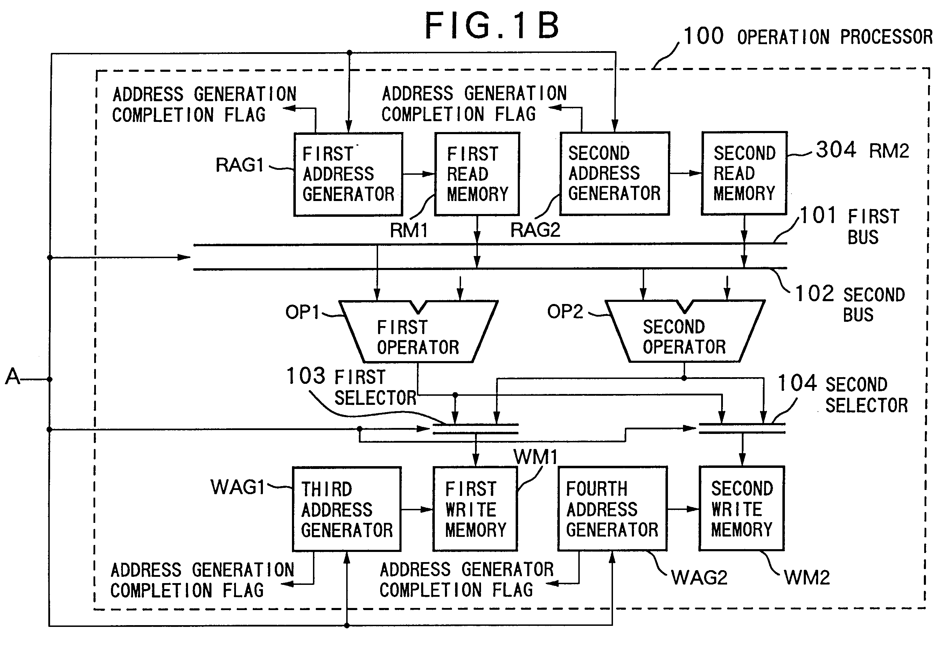

Fig. 1 is a block diagram to show an embodiment of a vector operation processor according to the present invention. In the figure, a vector operation processor comprises an operation processor 100 for vector data operation and a controller 110.

The operation processor 100 comprises a first address generator RAG1, a second address generator RAG2, a third address generator WAG1, a fourth address generator WAG2, a first read memory RM1, a second read memory RM2, a first bus 101, a second bus 102, a first operator OP1, a second operator OP2, a first selector 103, a second selector 104, a first write memory WM1 and a second write memory WM2.

A vector operation processing system is formed by combining an arbitrary read memory RM1 or RM2 and the corresponding address generator RAG1 or RAG2, an arbitrary operator OP1 or OP2 and an arbitrary write memory WM1 or WM2 and the corresponding address generator WAG1 or WAG2.

The operation processor 100 has a configuration where two vector operations can be processed in parallel. Specifically, each of the two read memories RM1 and RM2 selects one of the buses 101 and 102 so as to prevent collision and outputs the vector data to the operator OP1 or OP2 and each of the selectors 103 and 104 selects a different operator OP1 or OP2 to output data to a write memory WM1 or WM2.

When one vector operation processing system is established, the other vector operation processing system is uniquely determined. Specifically, when the combination of the first read memory RM1, the second operator OP2 and the second write memory WM2 constitutes an operation processing system, for example, the other operation processing system operable in parallel with such system can be formed as a combination of the remaining resources: the second read memory RM2, the first operator OP1 and the first write memory WM1. Though not shown, a certain clock signal common to them is used for access to the read and write memories and operation at the operators.

The first to the fourth address generators RAG1, RAG2, WAG1 and WAG2 supply a series of addresses to read memories RM1 and RM2 and write memories WM1 and WM2. The control signal supplied from the controller 110 to the operation processor 100 specifies the output bus (first bus 101 or second bus 102) for two read memories RM1 and RM2, selects the input for two selectors 309 and 310 and controls four address generators 301, 303, 311 and 313.

These first to fourth address generators RAG1, RAG2, WAG1 and WAG2 incorporate a counter to count the vector length, which generates addresses to be sent to the corresponding memory until output of an address generation completion flag.

Fig. 3 shows the configuration of a counter provided at the first to the fourth address generators RAG1, RAG2, WAG1 and WAG2. A counter comprises a selector 150, a register 151, an adder 152 and a comparator 153. Upon receipt of vector lengths with the control signal from the controller 110, the selector 150 selects a vector length and stores it to the register 151. Thereafter, the selector 150 makes selection from outputs of the adder 152 for storing at the register 151 until output of an address generation completion flag from the comparer 153.

The adder 152 counts down the vector length synchronizing with processing at the operator OP1 or OP2 (i.e. synchronizing with the common clock). Specifically, each time the processing of one vector data completes at the operator OP1 or OP2, the vector length is decremented. The comparator 153 compares the output from the adder 152 with 0 and when they are the same (when the processing for the entire vector length is completed at the operator OP1 or OP2), outputs an address generation completion flag. Upon this address generation completion flag, the first to the fourth address generators RAG1, RAG2, WAG1 and WAG2 stop address generation.

The above counter is also provided in the conventional address generator of Fig. 4, but this embodiment is characterized by utilization of the address completion flag from this counter for resetting of the resource status as described later by outputting it to the resource status table 107.

The controller 110 comprises an instruction decoder 111, a resource status table 112, an instruction execution judging device 113 and a register 114. The instruction decoder 111 decodes an instruction input from outside, outputs the type of the resource to be used by the instruction (request resource) to the resource status table 112 and outputs the control signal and the number of vector data (vector length) for operation processing to the operation processor 100.

The resource status table 112 holds the information to indicate whether each of the resources (memories RM1, RM2, WM1 and WM2 and operators OP1 and OP2) of the operation processor 100 is in use or not (= resource status information) and outputs such information to the instruction execution judging device 113.

The instruction execution judging device 113 compares the request resource from the instruction decoder 111 and the resource status information from the resource status table 112. If the request resource is not in use (no contention for the resource), the instruction execution judging device 113 enables its output. The output from the instruction execution judging device 113 is sent to the resource status table 112 and the register 114. When the output from the instruction execution judging device 113 is enabled, the resource corresponding to the request resource in the resource status table 112 is changed to the resource in use and the control signal input from the register 114 is sent to the operation processor 100 in order for execution of the vector processing instruction. When the output from the instruction execution judging device 113 is not enabled (no resource is available), the resource status table 112 is not updated and the register 114 does not output the control signal to the operation processor 100 and the execution of the instruction is held until the resource contention is over.

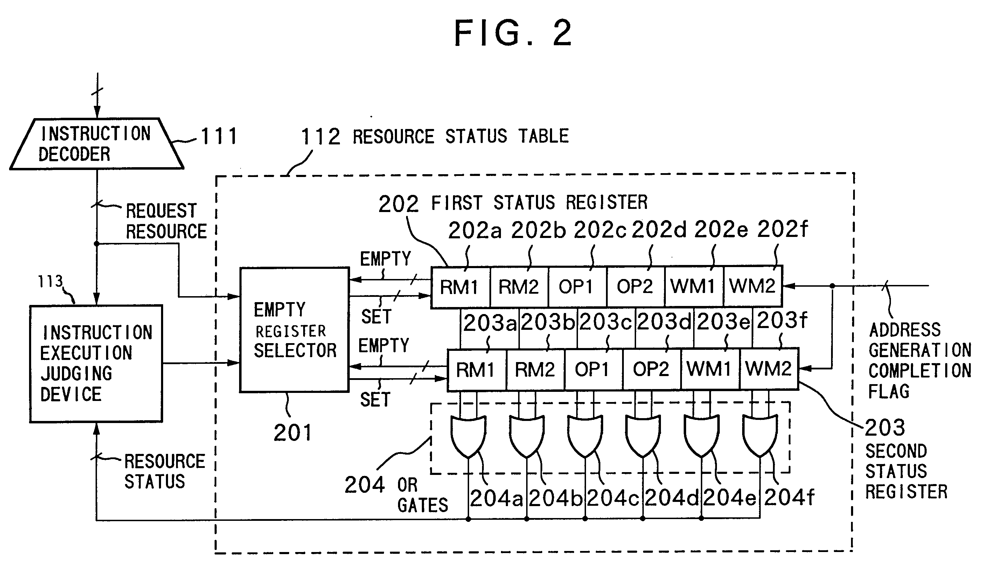

Fig. 2 shows the configuration of the resource status table 112. The resource status table 112 comprises an empty register selector 201, a first status register 202 and the second status register 203 and a series of OR gates (OR gate row) 204.

The first status register 202 comprises six flip-flops 202a to 202f set by the set signal from the empty register selector 201 and reset by the address generation completion flag. The second status register 203 comprises six flip-flops 203a to 203f set by the set signal from the empty register selector 201 and reset by the address generation completion flag. The OR gate row 204 is provided with six OR gates 204a to 204f, which receive the outputs from the flip-flops 202a to 202f and 203a to 203f from the first and the second registers 202 and 203. Specifically, the OR gate 204a receives the outputs from the flip-flop 202a and the flip-flop 203a, the OR gate 204b receives the outputs from the flip-flop 202b and the flip 203b, and each of the remaining OR gates similarly receives the outputs from the two corresponding flip-flops.

These flip-flops 202a to 202f and 203a to 203f correspond to the resources of the operation processor 100 (memories RM1, RM2, WM1 and WM2 and operators OP1 and OP2) respectively. The flip-flops 202a to 202f and 203a to 203f indicate the status of the corresponding resources (whether the applicable resource is in use or not) by their set (high level) or reset (low level) status.

For example, when it is defined that the high level signal indicates "in use" and the low level signal indicates "not in use", the set status at the flip-flops 202a to 202f and 203a to 203f means that the corresponding resources are in use and their reset status means that the corresponding resources are not in use. Thus, the status of the corresponding resource can be judged from the output (resource status signal) from the OR gate corresponding to one of the flip-flops 202a to 202f and 203a to 203f.

The instruction execution judging device 113 receives the resource status signal from the OR gates 204a to 204f of the OR gate row 204 and judges the status of the resources by these resource status signals.

The empty register selector 201 is a logic circuit which judges which of the two (the first and the second) status registers 202 and 203 is not in use and supplies the set signal to set the flip-flop corresponding to the resource to the "in use" status. The empty register selector 201 judges that the status register 202 or 203 is empty when the flip-flops for the first status register 202 or the second status register 203 are all reset. The status registers 202 and 203 receive the address generation completion flag from the above first to fourth address generators RAG1, RAG2, WAG1 and WAG2. Output of the address generation completion flag from the address generators RAG1, RAG2, WAG1 and WAG2 resets the status registers 202 or 203 which holds the status of the resource set to "in use" among the resources corresponding to the address generators RAG1, RAG2, WAG1 and WAG2 (read memories RM1, RM2 and write memories WM1 and WM2). The reset status register 202 or 203 becomes empty (all resources are not in use) and outputs the signal to indicate its empty status to the empty register selector 201.

The signal to indicate the request resource from the instruction decoder 111 is sent to the empty register selector 201 of the resource status table 112 and the empty register selector 201 outputs the set signal to the empty status register based on such resource request signal. The output from the instruction execution judging device 113 is sent to the empty register selector 201 of the resource status table 112 and when the output from this instruction judging device 113 is enabled, the status register 202 or 203 is updated by the set signal. When the output from the instruction execution judging device 113 is not enabled, the status registers 202 and 203 are not updated until either of them becomes empty.

With the resources used in a vector operation processing (read memory RM1, operator OP1 and write memory WM2, for example) in set status at the first register 202 and the resources used in the other vector operation processing (read memory RM2, operator OP2 and write memory WM1, for example) in set status at the second status register 203, the resource statuses can be grasped individually even when the two vector operation processing systems are in operation in parallel. This enables smooth control of parallel processing.

In this embodiment, two status registers 202 and 203 are allocated to each group of resources used in two vector operation processing systems so that the resource statuses can be held by twelve flip-flops regardless of the vector length, in contrast to the conventional device as shown in Fig. 5. In such conventional device, when the vector length is 3, for example, six registers 401 each comprising two flip-flops (twelve flip-flops in total) and six sets of a 2-bit adder 401, a selector 403 and a comparator 404 are required. Further, its hardware amount increases as the increase of the vector length, as mentioned above. Specifically, as the vector length n increases, the hardware amount increases in proportion to log₂n. Thus, it is proved that the simple hardware configuration with a resource status table 112 independent from the vector length reduces the hardware amount of the resource status table 112. The longer the vector length processed at the operation processor 100 becomes, the stronger the effect of this configuration is felt.

Obviously, various modifications can be made to the above embodiment. For example, though the above embodiment shows an application of the present invention to a vector operation processor for two parallel operations, this can be naturally applied to a vector operation processor for three or more parallel operations. Further, the status registers 202 and 203 indicate that the resource is in use by high level output and that the resource is not in use by low level output, but the output from the flip-flops can be defined vice versa.

## Claims

1. A vector operation processor comprising:
an operation processor (100) for vector data processing, and a controller (110) for control of parallel processing by said operation processor,
said operation processor (100) comprising a plurality of read memories (RM1, RM2) to store said vector data, a plurality of operation means (OP1, OP2) for operating the vector data read from said memories (RM1, RM2), a plurality of write memories (WM1, WM2) to store the operation result from said operation means, and a plurality of address generation means (RAG1, RAG2, WAG1, WAG2) provided for each of said read and write memories to supply read or write address, and
said operation processor forming a plurality of operation processing systems capable of parallel operations with said read memories, said operation means and said write memories, and
said controller further comprising an instruction decoder (111) to decode the vector operation instruction and to output the operation control signal to said operation processor according to said instruction,
a resource status table (112) to hold the information indicating whether the resource including said read memory, operation means and write memory in said operation processor is in use or not, and an instruction execution judging means (113) for referring to said resource status table (112) and judging whether the resource requested by said vector operation instruction is usable or not,
said resource status table (112) further comprising status holding means (202, 203) for holding information indicating whether each resource is in use or not for the number corresponding to the number of resources, to which the address generation completion signal output from said address generation means is sent, said status holding means (202, 203) setting the information to "in use" when the resource requested by said vector instruction is not in use and setting, upon receipt of address generation completion signal output from said address generation means, the information in use corresponding to said address generation means to "not in use".

2. A vector operation processor of Claim 1 wherein said resource status table (112) comprises a selection means (201) for selecting one of said status holding means with the resources not in use and outputting a set signal to set "in use" information for the resource requested by said vector operation instruction.

3. A vector operation processor of Claim 1 wherein said resource status table (112) comprises a selection means (201) which, if said instruction execution judging means judges that the requested resource can be used, selects said status holding means with the resources not in use and outputs a set signal to the resource requested by said vector operation instruction.

4. A vector operation processor of Claim 1 wherein said status holding means (202, 203) of said resource status table (112) comprises a plurality of flip-flops (202a-202f) corresponding to said resources.

5. A vector operation processor of Claim 1 wherein said resource status table (112) selects said status holding means (202, 203) with the resources not in use and outputs a set signal to the resource requested by said vector operation instruction upon judgment by said instruction execution judging means (113) that the resource can be used,
said status holding means (202, 203) of said resource status table comprising a plurality of flip-flops (202a-202f) corresponding to said resources, and
said flip-flops (202a-202f) being set by said set signal from said selection means (201) and reset by the address generation completion signal output from said address generation means.
